# EUROPÄISCHE PATENTSCHRIFT

(11) **EP 3 700 799 B1**
(45) Veröffentlichungstag und Bekanntmachung des Hinweises auf die Patenterteilung: **29.06.2022**
(21) Anmeldenummer: 18749751.6
(22) Anmeldetag: 27.07.2018
(51) Int. Cl.: B62D 1/181, F16H 57/039

(54) **LENKSÄULE FÜR EIN KRAFTFAHRZEUG**
STEERING COLUMN FOR A MOTOR VEHICLE
COLONNE DE DIRECTION POUR VÉHICULE AUTOMOBILE

(30) Priorität: 23.10.2017 DE 102017218894
(43) Veröffentlichungstag der Anmeldung: 02.09.2020
(73) Patentinhaber: thyssenkrupp Presta AG, 9492 Eschen (LI); thyssenkrupp AG, 45143 Essen (DE)
(72) Erfinder: SPECHT, Jean-Pierre, 9469 Haag (CH); HUBER, Sebastian, 6811 Göfis (AT)
(74) Vertreter: thyssenkrupp Intellectual Property GmbH
(86) Internationale Anmeldenummer: PCT/EP2018/070391
(87) Internationale Veröffentlichungsnummer: WO 2019/081081

(56) Entgegenhaltungen:
- CN-U- 201 534 560
- DE-A1-102004 052 259
- DE-B- 1 208 204
- DE-B3-102013 101 045
- DE-C1- 19 524 196
- US-A- 4 691 587
- US-A1- 2016 132 725

## Beschreibung

### Stand der Technik

Die Erfindung betrifft eine Lenksäule für ein Kraftfahrzeug, umfassend eine Trageinheit, die an einer Fahrzeugkarosserie anbringbar ist, und von der eine Stelleinheit gehalten ist, in der eine Lenkspindel um eine Längsachse drehbar gelagert ist, und umfassend einen Verstellantrieb, der zwischen der Trageinheit und der Stelleinheit angeordnet ist, und von dem die Stelleinheit relativ zur Trageinheit verstellbar ist, wobei der Verstellantrieb eine in eine Spindelmutter eingreifende Gewindespindel mit einer Spindelachse aufweist, und die Spindelmutter und die Gewindespindel von einem Stellmotor relativ zueinander drehend antreibbar sind, wobei der Stellmotor eine Motorwelle aufweist, die mit einem um eine Antriebsachse drehbaren Antriebsrad gekuppelt ist, das direkt oder mittelbar in Wirkeingriff steht mit einem um die Spindelachse drehbaren Abtriebsrad, welches drehfest verbunden ist mit der Spindelmutter oder der Gewindespindel, wobei die Antriebsachse und die Spindelachse im Wesentlichen parallel zueinander angeordnet sind, und im Wirkeingriff zwischen Antriebsrad und Abtriebsrad ein Zwischenrad angeordnet ist, welches um eine im Wesentlichen parallel zur Antriebsachse und/oder Spindelachse angeordnete Zwischenachse drehbar ist.

Lenksäulen für Kraftfahrzeuge weisen eine Lenkwelle mit einer Lenkspindel auf, an deren in Fahrtrichtung hinteren, dem Fahrer zugewandten Ende ein Lenkrad zur Einbringung eines Lenkbefehls durch den Fahrer angebracht ist. Die Lenkspindel ist um ihre Längsachse in einer Stelleinheit drehbar gelagert, die von einer Trageinheit an der Fahrzeugkarosserie gehalten ist. Dadurch, dass die Stelleinheit in einer mit der Trageinheit verbundenen Mantel-einheit, auch als Führungskasten oder Kastenschwinge bezeichnet, in Richtung der Längsachse teleskopartig verschiebbar aufgenommen ist, kann eine Längsverstellung erfolgen. Eine Höhenverstellung kann dadurch realisiert werden, dass die Stelleinheit oder eine diese aufnehmende Manteleinheit schwenkbar an der Trageinheit gelagert ist. Die Verstellung der Stelleinheit in Längs- bzw. Höhenrichtung ermöglicht die Einstellung einer ergonomisch komfortablen Lenkradposition relativ zur Fahrerposition in Betriebsstellung, auch als Fahr- oder Bedienposition bezeichnet, in der ein manueller Lenkeingriff erfolgen kann.

Es ist im Stand der Technik bekannt, zur Verstellung der Stelleinheit relativ zur Trageinheit einen motorischen Verstellantrieb mit einer Antriebseinheit vorzusehen, die einen elektrischen Stellmotor umfasst, der - in der Regel über ein Getriebe - mit einem Spindeltrieb verbunden ist, der eine in eine Spindelmutter eingeschraubte Gewindespindel umfasst. Durch die Antriebseinheit sind die Gewindespindel und die Spindelmutter gegeneinander um eine Achse, nämlich die Gewindespindelachse oder kurz Spindelachse, drehend antreibbar, wodurch die Gewindespindel und die Spindelmutter je nach Drehrichtung in Richtung der Gewindespindelachse translatorisch aufeinander zu oder voneinander weg bewegt werden können.

In einer Ausführungsform des Verstellantriebs ist die Gewindespindel bezüglich Drehung um ihre Spindelachse unverdrehbar mit der Trageinheit oder alternativ mit der Stelleinheit gekoppelt und greift in die Spindelmutter ein. Die Spindelmutter ist von der Antriebseinheit, die feststehend mit der Stelleinheit oder der Trageinheit verbunden ist, um ihre Achse, die der Spindelachse entspricht, drehend antreibbar, aber in Richtung der Spindelachse feststehend an der Stelleinheit oder alternativ an der Trageinheit gelagert. Die Gewindespindel stützt sich in Richtung der Spindelachse an der Trageinheit oder an der Stelleinheit ab, und die Spindelmutter entsprechend an der Stelleinheit oder an der Trageinheit, so dass die Gewindespindel in Richtung der Spindelachse translatorisch verschiebbar ist, indem die Spindelmutter von der Antriebseinheit um die Spindelachse drehend angetrieben wird, so dass ein rotatorischer Antrieb der Gewindespindel eine translatorische Verstellung von Trageinheit und Stelleinheit relativ zueinander in Richtung der Spindelachse bewirkt. Diese Ausführung wird auch als Tauchspindelantrieb bezeichnet.

In einer alternativen Ausführungsform ist die Gewindespindel von der Antriebseinheit um ihre Spindelachse drehend antreibbar und greift in die Spindelmutter ein, die an der Trageinheit oder alternativ an der Stelleinheit bezüglich Drehung um die Gewindespindelachse feststehend angebracht ist. Wie in der vorgenannten Ausführungsform stützt sich die Gewindespindel an der Trageinheit oder der Stelleinheit ab, und die Spindelmutter entsprechend an der Stelleinheit oder alternativ an der Trageinheit, so dass ein rotatorischer Antrieb der Gewindespindel wie in der erstgenannten Ausführung eine translatorische Verstellung von Trageinheit und Stelleinheit relativ zueinander in Richtung der Spindelachse bewirkt. Diese Ausführung wird daher auch als Rotationsspindelantrieb bezeichnet.

Durch den rotatorischen Antrieb der Gewindespindel oder der Spindelmutter wird in beiden Ausführungen eine translatorische Verstellung von Trageinheit und Stelleinheit relativ zueinander in Richtung der Spindelachse bewirkt. In beiden Ausführungen bildet der Spindeltrieb einen zwischen Trageinheit und Stelleinheit wirksamen motorischen Verstellantrieb, durch den die Stelleinheit zur Verstellung relativ zur Trageinheit verstellt werden kann, wobei die Gewindespindel und die Spindelmutter relativ zueinander rotatorisch und translatorisch motorisch bewegbar sind.

Zur Realisierung einer Längsverstellung der Stelleinheit in Richtung der Längsachse der Lenkspindel kann ein Verstellantrieb zwischen der Stelleinheit und einer diese axial längsverschieblich aufnehmenden Manteleinheit, auch Führungskasten oder Kastenschwinge genannt, angeordnet sein, welche mit der Trageinheit verbunden ist, und wobei die Spindelachse im Wesentlichen parallel zur Längsachse ausgerichtet sein kann.

Zur Höhenverstellung kann ein Spindeltrieb zwischen der Trageinheit und einer daran höhenverschwenkbar gelagerten Stelleinheit oder Manteleinheit, in der die Stelleinheit aufgenommen ist, angeordnet sein. An einer Lenksäule können eine motorische Längs- und Höhenverstellung einzeln oder in Kombination ausgebildet sein.

Eine Lenksäule mit einem derartigen Verstellantrieb ist beispielsweise aus der DE 10 2017 206 551 A1 bekannt. Der Antrieb erfolgt über ein mit dem Stellmotor gekuppeltes Schneckengetriebe, bei dem die Antriebsachse des als Schneckenwelle ausgebildeten Antriebsrads quer zur Abtriebsachse des als Schneckenrad ausgebildeten Abtriebsrads steht, dies ist die Spindelachse, um die je nach Ausführung die Spindelmutter oder die Gewindespindel rotiert. Der Stellmotor steht entsprechend von der Gewindespindel aus gesehen seitlich ab, und es sind quer zueinander stehende Lageranordnungen erforderlich. Dadurch wird ein relativ großer Bauraum eingenommen, insbesondere bei der Längsverstellung einer Lenksäule. Zudem ist die Realisierung der in unterschiedlich im Raum orientierten Lager und die Montage der Antriebs- und Abtriebsräder aufwendig.

Eine Lenksäule mit den eingangs genannten Merkmalen ist aus der DE 12 08 204 B bekannt. Nachteilig ist dabei, dass durch Toleranzen und Verschleiß der Wirkeingriff zwischen Antriebsrad und Abtriebsrad beeinträchtigt werden kann.

Angesichts der vorangehend erläuterten Problematik ist es eine Aufgabe der vorliegenden Erfindung, eine Lenksäule mit einem elektromotorischen Verstellantrieb, zumindest zur Längsverstellung, anzugeben, welche einen optimierten Wirkeingriff zwischen Antriebsrad und Abtriebsrad ermöglicht.

### Darstellung der Erfindung

Diese Aufgabe wird gelöst durch eine Lenksäule für ein Kraftfahrzeug mit den Merkmalen des Anspruchs 1. Vorteilhafte Weiterbildungen ergeben sich aus den Unteransprüchen.

Erfindungsgemäß wird für eine Lenksäule der eingangs genannten Art vorgeschlagen, dass die Zwischenachse quer zur Achsrichtung von Antriebsachse und Spindelachse verschiebbar gelagert ist.

Im Wirkeingriff zwischen Antriebsrad und Abtriebsrad ist ein Zwischenrad angeordnet, welches um eine im Wesentlichen parallel zur Antriebsachse und/oder Spindelachse angeordnete Zwischenachse drehbar ist. Das Zwischenrad dient zur Momentübertragung und steht mit dem Antriebsrad und/oder dem Abtriebsrad in Wirkeingriff, beispielsweise in Verzahnungseingriff mit einer Stirnverzahnung. Es ist denkbar und möglich, dass ein Zwischenrad eingesetzt wird, wodurch das Übersetzungsverhältnis des Getriebes allein durch Antriebs- und Abtriebsrad bestimmt wird, oder auch zwei unterschiedliche, auf der Zwischenachse drehfest miteinander gekuppelte Zwischenräder zur Realisierung einer Getriebestufe einzusetzen, von denen eines mit dem Antriebsrad und das andere mit dem Abtriebsrad in Eingriff steht. Auch hier ist unter der im Wesentlichen parallelen Ausrichtung ein maximaler Winkel zwischen der Zwischenachse und der Antriebsachse bzw. der Spindelachse von ±10° zu verstehen, wobei besonders bevorzugt die Zwischenachse genau parallel zur Spindelachse und/oder zur Antriebsachse ausgerichtet ist. Die Zwischenachse erstreckt sich ebenfalls in Achsrichtung, wodurch die Vorteile einer kompakten Bauweise und einer vereinfachten Montage wie oben für Antriebs- und Abtriebsrad erläutert realisiert werden. Mit anderen Worten sin erfindungsgemäß sämtliche Getriebeachsen des Verstellantriebs parallel zueinander ausgerichtet.

Die Erfindung sieht vor, dass die Zwischenachse quer zur Achsrichtung von Antriebsachse und Spindelachse verschiebbar gelagert ist. Durch die Verschiebung kann das auf der Zwischenachse angeordnete Zwischenrad jeweils in radialer Richtung relativ zum Antriebsrad und zum Abtriebsrad bewegt werden, also bei Stirnrädern in oder entgegen der Richtung des Verzahnungseingriffs. Durch Verlagerung des Zwischenrads ist es möglich, den Wirkeingriff zwischen Antriebs- und Abtriebsrad optimal einzustellen, wobei bevorzugt nach dem Erreichen des optimalen Wirkeingriffs, also des optimalen Zahnflankenspiels, das Zwischenrad so fixiert wird, dass dieses rotierbar ist, jedoch in seiner Position gegenüber dem Antriebsrad und dem Abtriebsrad fix ist. Durch den optimierten Verzahnungseingriff wird die Laufruhe erhöht und Verschleiß minimiert.

Die Verschiebbarkeit kann dadurch realisiert werden, dass das Zwischenrad um die Zwischenachse in einem Gleitstück drehbar gelagert ist, welches in einer Gleitführung verschiebbar gelagert ist. Das Gleitstück kann in der Gleitführung, beispielsweise in einer Gleitnut, entlang einer Gleitbahn bewegt werden. Die Gleitführung kann linear oder auch bogenförmig quer zur Achsrichtung verlaufen, so dass das auf der Zwischenachse angebrachte Zwischenrad in einer geraden oder bogenförmigen Bewegung relativ zum Antriebs- und Abtriebsrad bewegt werden kann, um den Verzahnungseingriff einzustellen. Eine derartige Gleitführung ist mit geringem Aufwand zuverlässig realisierbar, und gewährleistet einen ruhigen und verschleißarmen Lauf über die Lebensdauer des Verstellantriebs.

Durch die erfindungsgemäße Anordnung der Zwischenachse parallel zur Achsrichtung kann eine Gleitführung einfach realisiert werden, beispielsweise in Form einer in Achsrichtung offenen Gleitnut. In der Gleitnut ist ein das Lager der Zwischenachse aufweisendes Gleitstück einfach in Achsrichtung einsetzbar, wodurch sich eine einfache Montage ergibt.

Alternativ zur Gleitführung kann die Zwischenachse an einer Schwinge gelagert sein, die um eine parallel zur Zwischenachse angeordnete Schwenkachse drehbar gelagert ist. Das Lager der Zwischenachse ist mit Abstand zum Schwingenlager angeordnet, und kann dadurch in Richtung auf die Antriebs- und oder Spindelachse verschwenkt werden. Dadurch kann ähnlich wie bei der Gleitführung der Wirkeingriff zwischen Antriebs-, Abtriebs- und Zwischenrad eingestellt werden.

Es ist vorteilhaft, dass die Zwischenachse in einer Federanordnung federnd abgestützt ist. Mit mindestens einem Federelement der Federanordnung ist das Gleitstück elastisch gehalten, so dass das auf der Zwischenachse angebrachte Zwischenrad federnd in Richtung der Verschiebbarkeit quer zur Achsrichtung von Antriebsachse und Spindelachse vorbelastet ist. Dadurch wird das Zwischenrad federnd in den Wirkeingriff angedrückt, beispielsweise in den Verzahnungseingriff mit den kämmenden Stirnrädern. Dadurch ergibt sich ein spielfreier oder spielarmer Wirkeingriff, der zu einer hohen Laufruhe und einem optimierten Wirkungsgrad führt. Eventueller Verschleiß wird durch die elastische Nachführung durch die Federanordnung ausgeglichen. Dank der Federanordnung kann das Zahnflankenspiel im Betrieb ausgeglichen oder auf ein gewünschtes Maß eingestellt werden.

Die Federanordnung kann Druck- und/oder Zugfedern aufweisen, welche sich relativ zur Antriebs- bzw. Abtriebsachse abstützen, und die Zwischenachse elastisch belasten, beispielsweise mit Federkraft in den Verzahnungseingriff andrücken. Eine vorteilhafte Ausführung weist einen Haltering auf, der beispielsweise hohlzylindrisch gestaltet ist zur Aufnahme eines Lagers, beispielsweise eines Wälzlagers, und der ein nach außen radial abstehendes Federelement aufweist, beispielsweise in Form einer federnden Zunge. Durch die federnde Zunge, die sich beispielsweise innen an einer Lageraufnahme eines Getriebegehäuses abstützt, kann das Lager und damit die darin gelagerte Zwischenachse federnd gegen den Verzahnungseingriff belastet werden.

Unter der im Wesentlichen parallelen Ausrichtung ist zu verstehen, dass die Antriebsachse und die Spindelachse mit einer Winkelabweichung von weniger als +/- 10° relativ zur gleichen Achsrichtung, im Folgenden auch kurz als die axiale Richtung oder die Achsrichtung bezeichnet, ausgerichtet sind. Mit anderen Worten ist unter der im Wesentlichen parallelen Ausrichtung eine maximaler Winkel zwischen der Spindelachse und der Antriebsachse von ±10° zu verstehen.

In einer vorteilhaften Ausführungsform sind die Antriebsachse und die Spindelachse parallel zueinander angeordnet.

Durch die parallele Anordnung von Antriebs- und Abtriebsachse wird die räumliche Breite des Getriebes im Wesentlichen durch die Durchmesser von Antriebs- und Abtriebsrad bestimmt, und kann entsprechend durch Einsatz relativ kleiner Getrieberäder im Hinblick auf eine sich in Achsrichtung erstreckende, schlanke Bauform optimiert werden. Dadurch kann eine Optimierung im Hinblick auf die Form und räumlichen Abmessungen des im Fahrzeug zur Verfügung stehenden, in der Regel knapp bemessenen Bauraums für die Lenksäule erfolgen, die mit den bisher im Stand der Technik bekannten Verstellantrieben mit quer zueinander stehenden Achsen nicht realisierbar ist. Folglich kann beispielsweise auch mehr Bauraum für Sicherheitseinrichtungen und dergleichen genutzt werden, was die Insassensicherheit des Fahrzeugs erhöht.

Ein weiterer Vorteil ist, dass die Lagerungen von Antriebs- und Abtriebsachse parallele Lagerachsen haben, und dadurch mit geringerem Bearbeitungsaufwand gefertigt und montiert werden können. Daraus resultiert weiterhin der Vorteil, dass Antriebs- und Abtriebsrad in Achsrichtung in den Lagern montiert werden können, wodurch der Montageaufwand bei der Fertigung des Verstellantriebs verringert wird.

Die Erfindung kann gleichermaßen bei einem Tauchspindel- oder Rotationsspindelantrieb verwirklicht werden.

Es ist vorteilhaft, dass die Antriebsachse und die Spindelachse im Wesentlichen parallel zur Längsachse angeordnet sind. Diese Ausführung, bei der die Achsrichtung in Längsrichtung der Stelleinheit ausgerichtet ist, ist insbesondere günstig für die Längsverstellung. Der gesamte, erfindungsgemäß besonders schmal bzw. schlank bauende Verstellantrieb kann an der prinzipbedingt in Längsrichtung langgestreckten Lenksäule seitlich parallel angegliedert sein, so dass die gesamte Lenksäule schlanker aufgebaut ist als im Stand der Technik, wodurch der zur Verfügung stehende Bauraum optimiert genutzt werden kann und eine einfachere Montage im Fahrzeug ermöglicht wird.

Das Antriebsrad und das Abtriebsrad können vorzugsweise als Stirnräder ausgebildet sein. Durch miteinander in Verzahnungseingriff stehende Stirnräder oder Stirnzahnräder kann ein kompaktes, effizientes Stirnradgetriebe gebildet werden. Der Abstand zwischen den Getriebeachsen, also zwischen Antriebs- und Spindelachse, kann über die Abmessungen der in Wirkeingriff stehenden Zahnräder optimiert werden, die beispielsweise mit relativ kleinem Durchmesser, zur Übertragung größerer Drehmomente in Achsrichtung breiter ausgebildet sein können, wodurch die erfindungsgemäß in Achsrichtung schlanke Bauform problemlos beibehalten werden kann.

Es kann vorgesehen sein, dass die Motorwelle koaxial zur Antriebsachse angeordnet ist. Dadurch ist es möglich, das Antriebsrad direkt drehmomentschüssig auf der Motorwelle anzubringen, beispielsweise als Stirnrad, oder auch die Stirnverzahnung einstückig auf der Motorwelle auszubilden, wodurch eine besonders kompakte Bauweise ermöglicht wird.

Bevorzugt kann vorgesehen sein, dass das Antriebsrad und das Abtriebsrad und/oder das Zwischenrad in einem Getriebegehäuse stirnseitig gelagert sind. Das Getriebegehäuse dient zur Aufnahme und Lagerung zumindest des Antriebs- und Abtriebsrads, deren Antriebs- und Spindelachse erfindungsgemäß parallel angeordnet sind, so dass eine zur Montage gut zugängliche Lageranordnung in einer Stirnseite des Getriebegehäuses ausgebildet sein kann, und eine in Achsrichtung gegenüberliegende Lageranordnung in einem Getriebedeckel, der in Achsrichtung aufgesetzt und am Getriebegehäuse befestigt wird. Die Lagerung für ein Zwischenrad und eine Gleitführung oder dergleichen kann ebenfalls axial stirnseitig realisiert werden. Vorteilhaft ist die erreichbare kompakte Bauform, sowie die fertigungs- und montagefreundliche Anordnung.

Eine vorteilhafte Weiterbildung der Erfindung sieht vor, dass genau drei Getrieberäder vorhanden sind. Dabei ist auf der Motorwelle des Stellmotors als erstes Getrieberad das Antriebsrad angebracht, welches als beispielsweise als Schnecke ausgebildet ist, und welches in das als Schneckenrad wirkende Zwischenrad eingreift, welches das zweite Getrieberad darstellt. Das Zwischenrad steht mit dem mit der Spindelmutter verbundenen Abtriebsrad in Wirkeingriff, welches das dritte Getrieberad bildet. In einer vorteilhaften Ausführung dieser Getriebeanordnung weist das mit der Spindelmutter verbundene Abtriebsrad eine Geradverzahnung auf, bei der die gerade ausgebildeten Zähne parallel zur Spindelachse der Gewindespindel verlaufen und sich somit auch die Zahnflanken in Richtung der Spindelachse erstrecken. Besonders bevorzugt ist die Geradverzahnung als Evolventenverzahnung ausgebildet. Dadurch werden beim Antrieb keine oder deutlich reduzierte axiale Kräfte in Richtung der Abtriebsachse auf die Spindelmutter übertragen. Das Zwischenrad kann eine in diese Geradverzahnung eingreifende Bogenverzahnung aufweisen, wobei die Achse des Zwischenrads - die Zwischenachse - winklig versetzt, also geneigt zur Antriebsachse des Antriebsrads und zur Abtriebsachse des Abtriebsrads angeordnet ist. Die Antriebsachse und die Abtriebsachse G können parallel zueinander angeordnet sein. Durch die geneigte Anordnung des Zwischenrads und die Ausbildung des Abtriebsrads mit einer Geradverzahnung kann eine hohe Laufruhe und ein hoher Wirkungsgrad der Momentübertragung realisiert werden.

In einer alternativen vorteilhaften Weiterbildung ist das Antriebsrad und das Abtriebsrad als Riemenrad ausgebildet und über ein Zugmittel miteinander wirkverbunden.

Bevorzugt ist das Zugmittel als Riemen, Besonders bevorzugt als Zahnriemen, ausgebildet. Es ist jedoch ebenfalls denkbar und möglich das Zugmittels als Kette auszubilden, wobei dann entsprechend das Antriebsrad und das Abtriebsrad als Kettenrad ausgebildet ist.

### Beschreibung der Zeichnungen

Vorteilhafte Ausführungsformen der Erfindung werden im Folgenden anhand der Zeichnungen näher erläutert. Im Einzelnen zeigen:
- Figur 1: eine schematische perspektivische Darstellung einer Lenksäule mit einer elektrischen Verstellung;
- Figur 2: die Lenksäule aus Figur 1 in einer weiteren perspektivischen Ansicht;
- Figur 3: der Verstellantrieb zur Längsverstellung der Lenksäule gemäß Figur 1 in auseinander gezogenem Zustand in einer perspektivischen Ansicht,
- Figur 4: der Verstellantrieb gemäß Figur 3 in einer weiteren perspektivischen Ansicht,
- Figur 5: einen Längsschnitt entlang der Antriebs- und Abtriebsachse durch den Verstellantrieb gemäß Figuren 3 und 4,
- Figur 6: einen Querschnitt A-A durch den Verstellantrieb gemäß Figur 5,
- Figur 7: einen Querschnitt B-B durch den Verstellantrieb gemäß Figur 5,
- Figur 8: einen Längsschnitt C-C durch den Verstellantrieb gemäß Figur 6,
- Figur 9: eine Detailansicht des Zwischenrads aus Figur 8,
- Figur 10: eine Detailansicht wie in Figur 8 einer weiteren Ausführungsform,
- Figur 11: ein Federelement in einer schematischen perspektivischen Ansicht,
- Figur 12: einen Längsschnitt entlang der Antriebs- und Abtriebsachse durch einen Verstellantrieb in einer weiteren Ausführungsform,
- Figur 13: eine schematische Darstellung eines Verstellantriebs in einer weiteren Ausführungsform.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

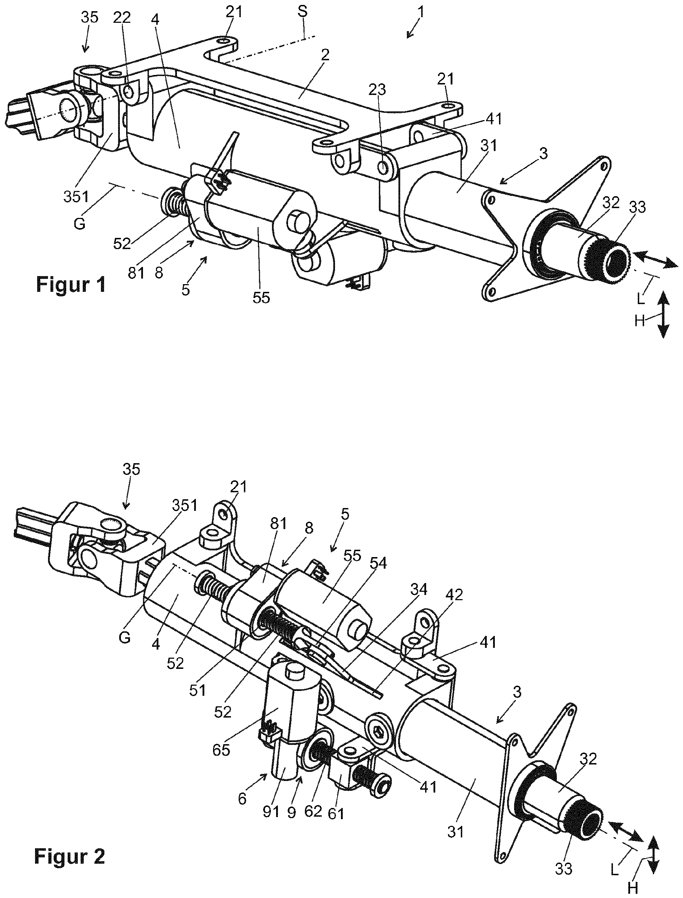

Figur 1 zeigt eine erfindungsgemäße Lenksäule 1 in einer schematischen perspektivischen Ansicht von oben schräg auf das hintere Ende, bezogen auf die Fahrtrichtung eines nicht dargestellten Fahrzeugs, wo ein hier nicht dargestelltes Lenkrad im Bedienungsbereich gehalten wird. Figur 2 zeigt dieselbe Lenksäule 1 in einer Ansicht von schräg unten gesehen.

Die Lenksäule 1 umfasst eine Trageinheit 2, welche als Konsole ausgebildet ist, die Befestigungsmittel 21 in Form von Befestigungsbohrungen aufweist zur Anbringung an einer nicht dargestellten Fahrzeug-Karosserie. Von der Trageinheit 2 wird eine Stelleinheit 3 gehalten, die in einer Manteleinheit 4 - auch als Führungskasten oder Kastenschwinge bezeichnetaufgenommen ist.

Die Stelleinheit 3 weist ein Mantelrohr 31 auf, in dem eine Lenkspindel 32 um eine Längsachse L drehbar gelagert ist, die sich axial in Längsrichtung, d.h. in Richtung der Längsachse L, erstreckt. Am hinteren Ende ist an der Lenkspindel 32 ein Befestigungsabschnitt 33 ausgebildet, an dem ein nicht dargestelltes Lenkrad anbringbar ist. Am vorderen Ende ist die Lenkspindel 32 mit einer Gabel 351 eines Universalgelenks 35 drehmomentschlüssig verbunden.

Die Stelleinheit 3 ist zur Realisierung einer Längsverstellung in der Manteleinheit 4 in Richtung der Längsachse L teleskopartig verschiebbar aufgenommen, um das mit der Lenkspindel 32 verbundene Lenkrad relativ zur Trageinheit 2 in Längsrichtung vor und zurück positionieren zu können, wie mit dem Doppelpfeil parallel zur Längsachse L angedeutet.

Die Manteleinheit 4 ist in ihrem vorderen Endbereich um eine quer zur Längsachse L liegende, horizontale Schwenkachse S verschwenkbar in einem Schwenklager 22 an der Trageinheit 2 gelagert. Im hinteren Bereich ist die Manteleinheit 4 über einen drehbaren Stellhebel 41 mit der Trageinheit 2 verbunden. Durch eine Drehbewegung des Stellhebels 41 mittels eines dargestellten Stellantriebs 6 (siehe Figur 2) kann die Manteleinheit 4 relativ zur Trageinheit 2 um die im Einbauzustand waagerecht liegende Schwenkachse S verschwenkt werden, wodurch eine Verstellung eines an dem Befestigungsabschnitt 33 angebrachten Lenkrads in Höhenrichtung H vorgenommen werden kann, was mit dem Doppelpfeil angedeutet ist.

Ein erster Verstellantrieb 5 zur Längsverstellung der Stelleinheit 3 relativ zur Manteleinheit 4 in Richtung der Längsachse L weist einen Spindeltrieb mit einer Spindelmutter 51 mit einem Innengewinde auf, in das eine sich längs einer Gewindespindelachse G, auch kurz als Spindelachse G bezeichnet, erstreckende Gewindespindel 52, auch kurz als Spindel 52 bezeichnet, eingreift, also mit ihrem Außengewinde in das korrespondierende Innengewinde der Spindelmutter 51 eingeschraubt ist. Die Gewindespindelachse G der Gewindespindel 52 verläuft im Wesentlichen parallel zur Längsachse L.

Die Spindelmutter 51 ist um die Spindelachse G in einem Getriebe 8 drehbar in einem Getriebegehäuse 81gelagert, welches fest mit der Manteleinheit 4 verbunden ist. In Richtung der Gewindespindelachse G, die im Folgenden auch gleichbedeutend als Spindelachse G bezeichnet wird, ist die Spindelmutter 51 axial über das Getriebegehäuse 81 an der Manteleinheit 4 abgestützt, wie weiter unten noch näher erläutert wird.

Die Gewindespindel 52 ist mit einem an ihrem hinteren Ende ausgebildeten Befestigungselement 54 über ein Übertragungselement 34 mit der Stelleinheit 3 verbunden, und zwar fest in Richtung der Gewindespindelachse G bzw. der Längsachse L und feststehend bezüglich Drehung um die Gewindespindelachse G. Durch die drehend antreibbare Spindelmutter 51 und die bezüglich Drehung um die Spindelachse G feststehende Gewindespindel 52 wird ein sogenannter Tauchspindelantrieb realisiert.

Wie Figur 2 entnehmbar ist, erstreckt sich das Übertragungselement 34 von der Stelleinheit 3 durch eine schlitzförmige Durchgangsöffnung 42 in der Manteleinheit 4. Zur Verstellung der Lenksäule 1 in Längsrichtung kann das Übertragungselement 34 frei in der Durchgangsöffnung 42 in Längsrichtung entlangbewegt werden.

Der Verstellantrieb 5 weist einen elektrischen Stellmotor 55 auf, von dem die Spindelmutter 51 bezüglich der Gewindespindelachse G relativ zur feststehenden Gewindespindel 52 drehend antreibbar ist. Dadurch kann - je nach Drehrichtung des Stellmotors 55 - die Gewindespindel 52 in Richtung der Achse G translatorisch relativ zur Spindelmutter 51 verlagert werden, so dass entsprechend die mit der Gewindespindel 52 verbundene Stelleinrichtung 3 relativ zu der mit der Spindelmutter 51 verbundenen Manteleinheit 4 in Richtung der Längsachse L verstellt wird. Der Antrieb der Spindelmutter 51 wird weiter unten noch detailliert erläutert.

In Figur 2 ist weiterhin erkennbar, wie ein zweiter Verstellantrieb 6 zur Verstellung in Höhenrichtung H an der Lenksäule 1 angebracht ist. Dieser Verstellantrieb 6 umfasst eine Spindelmutter 61, in deren Innengewinde 74 längs einer Gewindespindelachse G eine Gewindespindel 62 eingreift. Der Verstellantrieb 6 weist ein Getriebe 9 auf, in dem die Gewindespindel 62 in einem Getriebegehäuse 91, welches an der Manteleinheit 4 befestigt ist, um die Gewindespindelachse G, die gleichbedeutend als Getriebeachse G bezeichnet wird, drehbar gelagert und axial, in Richtung der Gewindespindelachse G, an der Manteleinheit 4 abgestützt ist. Von einem elektrischen Stellmotor 65 ist die Gewindespindel 62 wahlweise in beide Rotationsrichtungen um ihre Gewindespindelachse drehend antreibbar.

Die Spindelmutter 61 ist bezüglich einer Drehung um die Gewindespindelachse G feststehend an einem Ende des zweiarmigen Stellhebels 41 angebracht, der um ein Schwenklager 23 drehbar an der Trageinheit 22 gelagert ist, und dessen anderer Arm mit dem anderen Ende mit der Manteleinheit 4 verbunden ist.

Durch Drehung der Gewindespindel 61 kann - je nach Drehrichtung des Stellmotors 65 - die Spindelmutter 61 in Richtung der Gewindespindelachse G translatorisch relativ zur Gewindespindel 62 verlagert werden, so dass entsprechend die über den Stellhebel 41 mit der Spindelmutter 61 verbundene Manteleinheit 4 samt der darin aufgenommenen Stelleinrichtung 3 relativ zu der Trageinheit 2 in Höhenrichtung H auf oder ab verstellt werden kann, wie mit dem Doppelpfeil angedeutet.

Durch die drehend antreibbare Gewindespindel 62 und die bezüglich Drehung feststehende Spindelmutter 61 wird ein sogenannter Rotationsspindelantrieb realisiert.

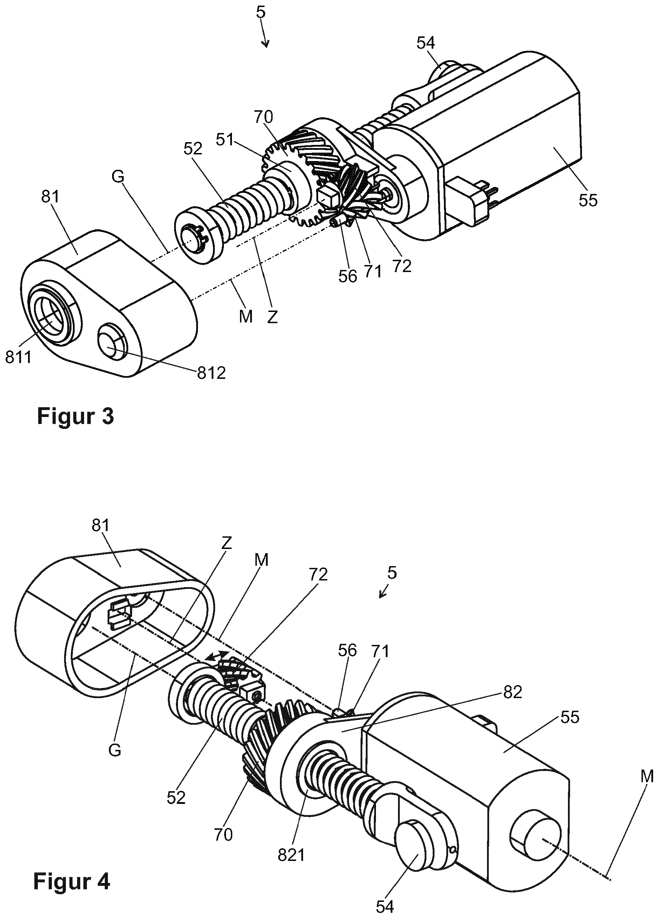

Die vorliegende Erfindung bezieht sich auf die Ausgestaltung des Getriebes 8, das anhand der Darstellungen in den Figuren 3 bis 10 und Figur 12 im Detail erläutert wird. In dem Getriebegehäuse 81 ist die Spindelmutter 51 um die jeweilige Spindelachse G drehbar, in axialer Richtung fest gelagert, und die Gewindespindel 52 ist unverdrehbar angebracht, wodurch ein Tauchspindelantrieb realisiert wird. In dem Getriebe 9 die Gewindespindel 62 drehend antreibbar, wodurch ein Rotationsspindelantrieb gebildet wird.

Im Folgenden werden anhand der Figuren 3 bis 9 exemplarisch Ausführungen des Getriebes 8 des als Tauchsspindelantriebs ausgebildeten Verstellantriebs 5 erläutert, wobei die Merkmale auch auf die Ausgestaltung eines Getriebes 8 für einen als Rotationsspindelantriebs ausgebildeten Verstellantrieb dadurch übertragen werden können, dass anstatt der Spindelmutter 51 die Gewindespindel 52 drehend antreibbar ist.

Figur 3 und Figur 4 zeigen den Verstellantrieb 5 in zwei schematischen perspektivischen Ansichten aus unterschiedlichen Blickwinkeln, wobei das Getriebe 8 in Längsrichtung, in der sich die Längsachse L und auch die Spindelachse G erstrecken, auseinander gezogen dargestellt ist.

Das Getriebegehäuse 81 weist einen Lagerdeckel 82 auf, an dem der Stellmotor 55 befestigt ist, und welcher in zusammengebauten Zustand das Getriebegehäuse 81 stirnseitig, auf der motornahen Seite verschließt.

Die Spindelmutter 51 ist drehfest mit einem Antriebsrad 70 verbunden, welches als Zahnrad, im gezeigten Beispiel als schrägverzahntes Stirnrad ausgebildet ist. Bevorzugt ist die Spindelmutter 51 und das Antriebsrad ein einstückiges integrales Bauteil, welches aus einem Kunststoff gebildet ist. Das Antriebsrad 70 ist in dem Getriebegehäuse 81 in einem Lager 811 und in dem Lagerdeckel 82 in einem Lager 821 drehbar gelagert.

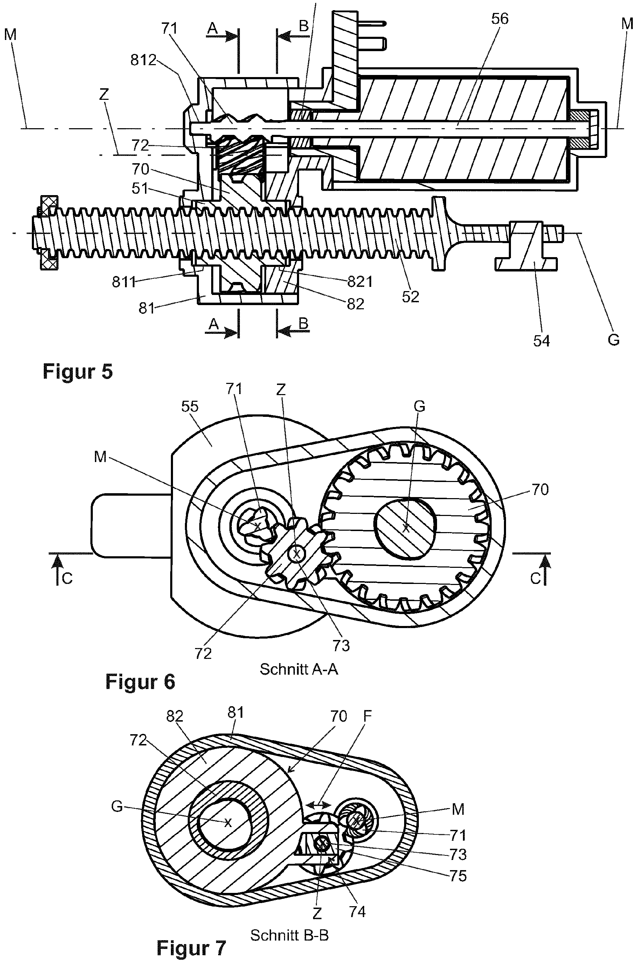

Figur 5 zeigt einen Längsschnitt durch den Verstellantrieb 5 in einer Schnittebene, in der die Gewindespindelachse G und die Antriebsachse (Motorachse) M liegen. Ein als Stirnrad ausgebildetes Antriebsrad 71 ist auf einer Motorwelle 56 des Stellmotors 55 angebracht, die sich auf der Antriebsachse M erstreckt, und daher gleichbedeutend als Antriebswelle 56 bezeichnet wird. Im gezeigten Beispiel ist das Antriebsrad 71 einstückig mit der Antriebswelle 56 ausgebildet, wobei die Verzahnung direkt in die Antriebswelle 56 eingebracht ist, so dass das Antriebsrad 71 einen relativ kleinen Durchmesser haben kann, was einer kompakten Bauform entgegenkommt.

Die Antriebswelle 56 ist motorseitig in einem Lager 822 gelagert, welches stirnseitig im Lagerdeckel 82 angeordnet ist, und stirnseitig in dem Getriebegehäuse 81 in einem Lager 812.

Die Gewindespindelachse G und die Antriebsachse (Motorachse) M liegen im Wesentlichen parallel zueinander, innerhalb einer Winkelabweichung von +/- 10°, und ebenfalls im Wesentlichen parallel zur Längsachse L.

Das Antriebsrad 71 steht in Verzahnungseingriff mit einem Zwischenrad 72, welches als Stirnrad ausgebildet ist und mit dem Abtriebsrad 70 kämmt. Das Zwischenrad 72 ist auf einer Zwischenwelle 73 drehbar angeordnet, die sich in Richtung einer Zwischenachse Z erstreckt. Die Zwischenachse Z liegt parallel zur Antriebsachse (Motorachse) M und zur Abtriebsachse (Spindelachse) G.

Dadurch, dass das Zwischenrad 72 zwischen Antriebsrad 71 und Abtriebsrad 70 kämmend eingegliedert ist, sorgt es für einen gleichsinnig zur Motorwelle 56 drehenden Antrieb der Spindelmutter 51, wobei das Übersetzungsverhältnis bestimmt wird durch die Zähnezahlen von Antriebsrad 71,Abtriebsrad 70 und Zwischenrad 72.

Aus der Querschnittsansicht von Figur 6 ist die Getriebenordnung deutlich erkennbar, in der das Antriebsrad 71, das Zwischenrad 72 und das Abtriebsrad 70 miteinander in Wirkeingriff stehen.

Das Zwischenrad 72 ist mit seiner Zwischenachse Z quer zur Antriebsachse M und zur Spindelachse G verschiebbar gelagert. Hierzu ist eine nut- oder schienenartige Gleitführung 74 in dem Lagergehäuse 81 und dem Lagerdeckel 82 ausgebildet, in der ein Gleitstück 75 in der Führungsrichtung F, die mit einem Doppelpfeil angedeutet ist, in der Führungsrichtung F verschiebbar gleitend gelagert. In dem Gleitstück 75 ist die Zwischenwelle 73 um die Zwischenachse Z gelagert, so dass das Zwischenrad 72 quer zur Achsrichtung relativ zum Abtriebsrad 70 und Antriebsrad 71 verschiebbar ist. Dadurch kann es in den Verzahnungseingriff mit dem Antriebsrad 71 und dem Abtriebsrad 70 bewegt werden.

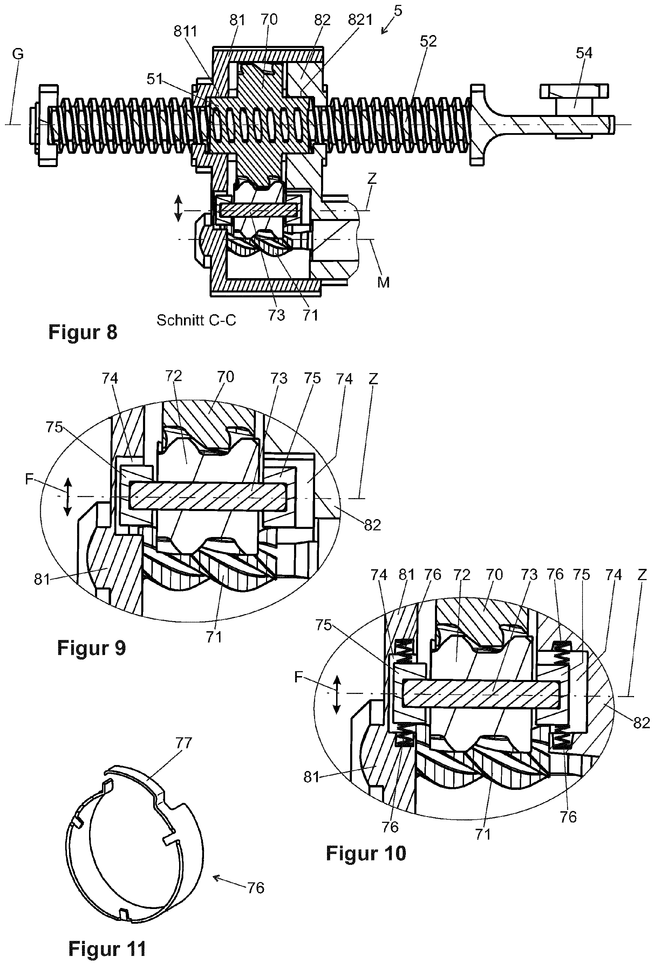

Um einen im Betrieb spielfreien bzw. einen spielarmen Verzahnungseingriff zu erzeugen, kann das Zwischenrad 72 durch eine Federanordnung mit einem oder mehreren Federelementen 76 quer zur Achsrichtung, in Führungsrichtung F der Gleitführung 74 elastisch belastet werden, wie in Figur 10 dargestellt. Dadurch wird das Zwischenrad 72 mit seiner Stirnverzahnung mit der Federkraft federnd relativ zur Verzahnung des Abtriebsrads 70 und des Antriebsrads 71 gehalten, wodurch Zahnflankenspiel im Betrieb ausgeglichen oder auf ein gewünschtes Maß eingestellt werden kann. Dadurch wird die Laufruhe erhöht und Verschleiß verringert.

Die Federanordnung kann beispielsweise mittels eines Federelements 76 realisiert werden, wie es einzeln in Figur 11 dargestellt ist. Dieses ist in Form eines umfangsseitig offenen, rohrzylindrischen Rings aus Federstahlblech ausgebildet, in dem beispielsweise ein Wälzlager oder eine als Gleitlager ausgebildete Lagerbuchse aufnehmbar ist. Das Federelement 76 kann eine radial nach außen abstehende Federzunge 77 aufweisen, die sich gegen das Lagergehäuse 81 oder den Lagerdeckel 82 abstützen kann und auf diese Weise für eine elastische Halterung der Zwischenachse Z relativ zur Antriebsachse M und zur Abtriebsachse G sorgt.

Aus den Ansichten in Achsrichtung von Figur 6 und 7 geht hervor, dass die gesamte Anordnung des Verstellantriebs 5 einschließlich Stellmotor 55 und Getriebegehäuse 81 relativ schmal quer zur Längsrichtung baut. Wie in Figur 1 und 2 erkennbar ist, kann sich der Verstellantrieb 5 an die Lenksäule 1 quasi anschmiegen, so dass diese eine besonders schlanke Bauform zur optimierten Ausnutzung des Bauraums erhält.

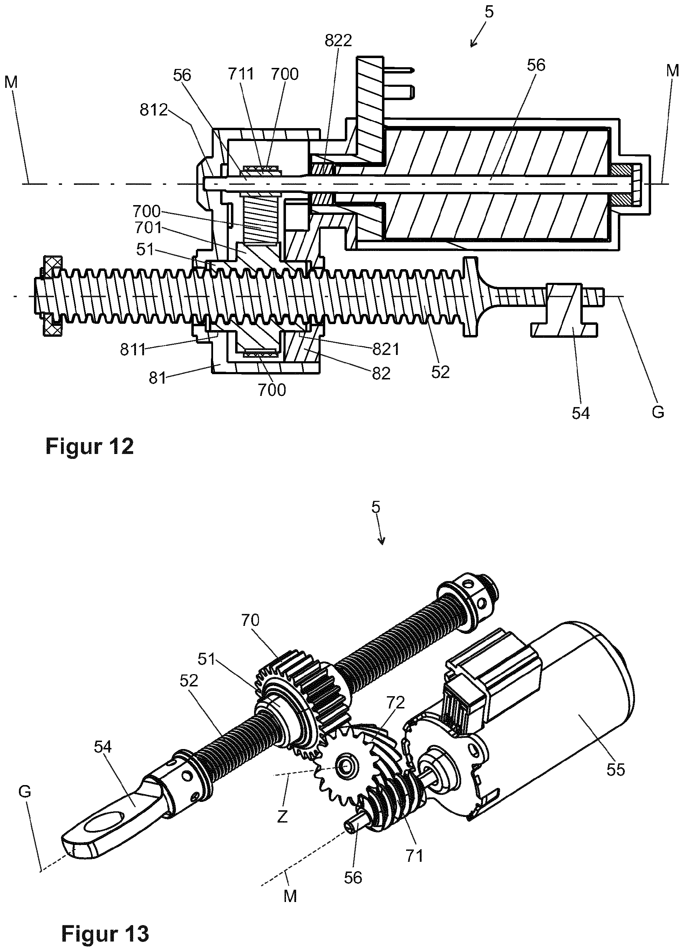

Figur 12 zeigt einen Längsschnitt durch den Verstellantrieb 5 in einer weiteren Ausführungsform in einer Schnittebene, in der die Gewindespindelachse G und die Antriebsachse (Motorachse) M liegen. Ein als Riemenrad ausgebildetes Antriebsrad 711 ist auf einer Motorwelle 56 des Stellmotors 55 angebracht, die sich auf der Antriebsachse M erstreckt, und daher gleichbedeutend als Antriebswelle 56 bezeichnet wird. Das als Riemenrad ausgebildete Abtriebsrad 701 ist mit der Spindelmutter 51 drehmomentenschlüssig gekoppelt, wobei die in dieser Ausführung das Abtriebsrad 701 und die Spindelmutter 51 als einstückiges integrales Bauteil ausgebildet ist. Die Spindelmutter 51 steht mit der Gewindespindel 52 in Wirkeingriff, wobei durch eine Rotation der Spindelmutter 51 die Gewindespindel 52 in Richtung der Gewindespindelachse G translatorisch bewegt wird. Das Zusammenwirken von Spindelmutter 51 und Gewindespindel 52 entspricht jener der zuvor dargestellten Ausführungsformen. Der einzige Unterschied besteht darin, dass das Abtriebsrad 701 und das Antriebsrad 711 über ein als Zahnriemen ausgebildetes Zugmittel 700 miteinander drehmomentenschlüssig gekoppelt sind. Dank des Zugmittels 700 lässt sich ein ruhiger und geräuscharmer Lauf des Verstellantriebs 5 realisieren. Der in der Figur 12 dargestellte Verstellantrieb lässt sich ebenfalls als Rotationsspindelantrieb ausführen, in dem das als Riemenrad ausgebildete Abtriebsrad drehfest mit der Gewindespindel gekoppelt ist und somit die Gewindespindel in Rotation versetzt wird, wenn das Antriebsrad durch den Stellmotor angetrieben wird und das Drehmoment mittels des Zugmittels auf das Abtriebsrad übertragen wird.

In Figur 13 ist eine dritte Ausführungsform eines erfindungsgemäßen Verstellantriebs 5 in einer schematischen perspektivischen Ansicht dargestellt, in der das Getriebegehäuse zur besseren Übersicht weggelassen ist. Wie in den vorangehenden Ausführungen ist auf der Motorwelle 56 des Stellmotors 55 das Antriebsrad 71angebracht, welches als Schnecke ausgebildet ist und mit dem als Schneckenrad wirkenden Zwischenrad 72 kämmt. Das Zwischenrad 72 steht mit dem Abtriebsrad 70 in Wirkeingriff. Eine Besonderheit dieser Getriebeanordnung ist, dass das mit der Spindelmutter 51 verbundene Abtriebsrad 70 eine Geradverzahnung aufweist, d.h. dessen gerade ausgebildete Zähne parallel zur Abtriebsachse G der Gewindespindel 52 verlaufen. Die Zähne erstrecken sich somit parallel zur Spindelachse G. Dadurch werden beim Antrieb keine oder deutlich reduzierte axiale Kräfte in Richtung der Abtriebsachse G auf die Spindelmutter 51 übertragen. Das Zwischenrad 72 weist eine darin eingreifende Bogenverzahnung auf, wobei die Zwischenachse Z nicht wie in den vorangehend beschriebenen Ausführungen parallel zur Antriebsachse (Motorachse) M und zur Abtriebsachse (Spindelachse) G verläuft, sondern winklig versetzt, also geneigt zur Antriebsachse M und zur Abtriebsachse G angeordnet ist. Die Antriebsachse M und die Abtriebsachse G können wie dargestellt parallel zueinander angeordnet sein. Das Zwischenrad 72 ist um die Zwischenachse Z drehbar im nicht dargestellten Getriebegehäuse gelagert, wie dies bereits zu den anderen Ausführungsformen ausgeführt wurde. In einer nicht dargestellten Abwandlung der Ausführungsform der Figur 13 kann ein im Betrieb spielfreier bzw. spielarmer Verzahnungseingriff erzeugt werden, in dem das Zwischenrad 72 durch eine Federanordnung mit einem oder mehreren Federelementen quer zur Achsrichtung elastisch belastet werden Somit kann auf eine einfache Weise die Anfederung des Zwischenrads 72, wie diese beispielsweise in der Figur 10 dargestellt ist, auch in einer Ausführungsform, wie diese in der Figur 13 dargestellt ist, zum Einsatz kommen.

Durch die geneigte Anordnung des Zwischenrads 72 und die Ausbildung des Abtriebsrads 70 mit einer Geradverzahnung kann eine hohe Laufruhe und ein hoher Wirkungsgrad der Momentübertragung realisiert werden.

### Bezugszeichenliste

- 1: Lenksäule
- 2: Trageinheit
- 21: Befestigungsmittel
- 22, 23: Schwenklager
- 3: Stelleinheit
- 31: Mantelrohr
- 32: Lenkspindel
- 33: Befestigungsabschnitt
- 34: Übertragungselement
- 4: Manteleinheit
- 41: Stellhebel
- 42: Durchgangsöffnung
- 5, 6: Verstellantrieb
- 51, 61: Spindelmutter
- 52, 62: Gewindespindel
- 54: Befestigungselement
- 55, 65: Stellmotor
- 56: Motorwelle (Antriebswelle)
- 66: Schnecke
- 700: Zugmittel
- 70, 701: Abtriebsrad
- 71, 711: Antriebsrad
- 72: Zwischenrad
- 73: Zwischenwelle
- 74: Gleitführung
- 75: Gleitstück
- 76: Federelement
- 77: Federzunge
- 8, 9: Getriebe
- 81, 91: Getriebegehäuse
- 811,812: Lager
- 82: Lagerdeckel
- 821,822: Lager

- L: Längsachse
- H: Höhenrichtung
- G: Gewindespindelachse (Spindelachse)
- M: Antriebsachse (Motorachse)
- Z: Zwischenachse

## Patentansprüche

1. Lenksäule (1) für ein Kraftfahrzeug, umfassend eine Trageinheit (2), die an einer Fahrzeugkarosserie anbringbar ist, und von der eine Stelleinheit (3) gehalten ist, in der eine Lenkspindel (32) um eine Längsachse (L) drehbar gelagert ist, und umfassend einen Verstellantrieb (5), der zwischen der Trageinheit (2) und der Stelleinheit (3) angeordnet ist, und von dem die Stelleinheit (3) relativ zur Trageinheit (2) verstellbar ist, wobei der Verstellantrieb (5) eine in eine Spindelmutter (51) eingreifende Gewindespindel (52) mit einer Spindelachse (G) aufweist, und die Spindelmutter (51) und die Gewindespindel (52) von einem Stellmotor (55) relativ zueinander drehend antreibbar sind, wobei der Stellmotor (55) eine Motorwelle (56) aufweist, die mit einem um eine Antriebsachse (M) drehbaren Antriebsrad (71, 711) gekuppelt ist, das direkt oder mittelbar in Wirkeingriff steht mit einem um die Spindelachse (G) drehbaren Abtriebsrad (70, 701), welches drehfest verbunden ist mit der Spindelmutter (51) oder der Gewindespindel (52), wobei die Antriebsachse (M) und die Spindelachse (G) im Wesentlichen parallel zueinander angeordnet sind, und im Wirkeingriff zwischen Antriebsrad (71) und Abtriebsrad (70) ein Zwischenrad (72) angeordnet ist, welches um eine im Wesentlichen parallel zur Antriebsachse (M) und/oder Spindelachse (G) angeordnete Zwischenachse (Z) drehbar ist, **dadurch gekennzeichnet, dass** die Zwischenachse (Z) quer zur Achsrichtung von Antriebsachse (M) und Spindelachse (G) verschiebbar gelagert ist.

2. Lenksäule (1) nach Anspruch 1, **dadurch gekennzeichnet, dass** die Antriebsachse (M) und die Spindelachse (G) im Wesentlichen parallel zur Längsachse (L) angeordnet sind.

3. Lenksäule (1) nach einem der vorangehenden Ansprüche, **dadurch gekennzeichnet, dass** das Antriebsrad (71) und das Abtriebsrad (70) als Stirnräder ausgebildet sind.

4. Lenksäule (1) nach einem der vorangehenden Ansprüche, **dadurch gekennzeichnet, dass** die Motorwelle (56) koaxial zur Antriebsachse (M) angeordnet ist.

5. Lenksäule (1) nach einem der vorangehenden Ansprüche, **dadurch gekennzeichnet, dass** das Zwischenrad (72) um die Zwischenachse (Z) in einem Gleitstück (75) drehbar gelagert ist, welches in einer Gleitführung (74) verschiebbar gelagert ist.

6. Lenksäule (1) nach einem der vorangehenden Ansprüche, **dadurch gekennzeichnet, dass** die Zwischenachse (Z) in einer Federanordnung (76) federnd gehalten ist.

7. Lenksäule (1) nach einem der vorangehenden Ansprüche, **dadurch gekennzeichnet, dass** das Antriebsrad (71), das Abtriebsrad (70) und/oder das Zwischenrad (72) in einem Getriebegehäuse (81, 82) stirnseitig gelagert sind.

8. Lenksäule (1) nach Anspruch 1, **dadurch gekennzeichnet, dass** das Antriebsrad (711) und das Abtriebsrad (701) als Riemenräder ausgebildet sind und über ein Zugmittel (700) wirkverbunden sind.

## Claims

1. A steering column (1) for a motor vehicle, comprising a support unit (2) which is attachable to a vehicle body and by which an actuator unit (3) in which a steering spindle (32) is mounted so as to be rotatable about a longitudinal axis (L) is held, and comprising an adjustment drive (5) which is disposed between the support unit (2) and the actuator unit (3) and by which the actuator unit (3) is adjustable relative to the support unit (2), wherein the adjustment drive (5) has a threaded spindle (52) which engages in a spindle nut (51) and has a spindle axis (G), and the spindle nut (51) and the threaded spindle (52) are drivable by a servomotor (55) so as to rotate in a mutually relative manner, wherein the servomotor (55) has a motor shaft (56) which is coupled to a drive gear (71, 711) which is rotatable about a drive axis (M) and which operatively engages directly or indirectly with an output gear (70, 701) which is rotatable about the spindle axis (G) and is connected in a rotationally fixed manner to the spindle nut (51) or the threaded spindle (52), wherein
the drive axis (M) and the spindle axis (G) are disposed so as to be substantially mutually parallel, and an idler gear (72) which is rotatable about an idler axis (Z) that is disposed so as to be substantially parallel to the drive axis (M) and/or the spindle axis (G) is disposed in the operative engagement between the drive gear (71) and the output gear (70),
**characterized in that**
the idler axis (Z) is mounted so as to be displaceable transversely to the axis direction of the drive axis (M) and the spindle axis (G).

2. The steering column (1) as claimed in claim 1, **characterized in that** the drive axis (M) and the spindle axis (G) are disposed so as to be substantially parallel to the longitudinal axis (L).

3. The steering column (1) as claimed in one of the preceding claims, **characterized in that** the drive gear (71) and the output gear (70) are configured as spur gears.

4. The steering column (1) as claimed in one of the preceding claims, **characterized in that** the motor shaft (56) is disposed so as to be coaxial with the drive axis (M).

5. The steering column (1) as claimed in one of the preceding claims, **characterized in that** the idler gear (72) is mounted in a sliding block (75) so as to be rotatable about the idler axis (Z), said sliding block (75) being mounted so as to be displaceable in a sliding guide (74).

6. The steering column (1) as claimed in one of the preceding claims, **characterized in that** the idler axis (Z) is held so as to be sprung in a spring assembly (76).

7. The steering column (1) as claimed in one of the preceding claims, **characterized in that** the drive gear (71), the output gear (70), and/or the idler gear (72) are mounted at the end side in a gearbox housing (81, 82).

8. The steering column (1) as claimed in claim 1, **characterized in that** the drive gear (711) and the output gear (701) are configured as belt pulleys and are operatively connected by way of a traction means (700).

## Revendications

1. Colonne de direction (1) destinée à un véhicule automobile, comprenant une unité de support (2) qui peut être installée sur une carrosserie de véhicule, et qui porte une unité de réglage (3) dans laquelle un arbre de direction (32) est monté en rotation autour d'un axe longitudinal (L), et comprenant un entraînement d'ajustage (5) qui est disposé entre l'unité de support (2) et l'unité de réglage (3) et qui permet d'ajuster l'unité de réglage (3) par rapport à l'unité de support (2), l'entraînement d'ajustage (5) présentant une broche filetée (52) venant en prise dans un écrou de broche (51) et dotée d'un axe de broche (G), et l'écrou de broche (51) et la broche filetée (52) pouvant être entraînés en rotation l'un par rapport à l'autre par un servomoteur (55), le servomoteur (55) présentant un arbre moteur (56) qui est couplé avec une roue menante (71, 711) pouvant tourner autour d'un axe d'entraînement (M), laquelle est directement ou indirectement en prise active avec une roue menée (70, 701) pouvant tourner autour de l'axe de broche (G), laquelle est respectivement reliée de manière verrouillée en rotation à l'écrou de broche (51) ou à la broche filetée (52), l'axe d'entraînement (M) et l'axe de broche (G) étant disposés de manière substantiellement parallèle l'un par rapport à l'autre, et dans laquelle, entre la roue menante (71) et la roue menée (70) une roue intermédiaire (72) est disposée en prise active et peut tourner autour d'un axe intermédiaire (Z) disposé de manière substantiellement parallèle à l'axe d'entraînement (M) et/ou à l'axe de broche (G),
**caractérisée en ce que** l'axe intermédiaire (Z) est monté en translation transversalement à la direction axiale de l'axe d'entraînement (M) et de l'axe de broche (G) .

2. Colonne de direction (1) selon la revendication 1, **caractérisée en ce que** l'axe d'entraînement (M) et l'axe de broche (G) sont disposés de manière substantiellement parallèle à l'axe longitudinal (L).

3. Colonne de direction (1) selon l'une quelconque des revendications précédentes, **caractérisée en ce que** la roue menante (71) et la roue menée (70) sont réalisées sous forme de roues dentées droites.

4. Colonne de direction (1) selon l'une quelconque des revendications précédentes, **caractérisée en ce que** l'arbre moteur (56) est disposé de manière coaxiale par rapport à l'axe d'entraînement (M).

5. Colonne de direction (1) selon l'une quelconque des revendications précédentes, **caractérisée en ce que** la roue intermédiaire (72) est montée pivotante autour de l'axe intermédiaire (Z) dans un coulisseau (75) qui est monté en translation dans une glissière de guidage (74).

6. Colonne de direction (1) selon l'une quelconque des revendications précédentes, **caractérisée en ce que** l'axe intermédiaire (Z) est maintenu de manière élastique dans un agencement de ressort (76).

7. Colonne de direction (1) selon l'une quelconque des revendications précédentes, **caractérisée en ce que** la roue menante (71), la roue menée (70) et/ou la roue intermédiaire (72) sont montées côté frontal dans un carter de transmission (81, 82).

8. Colonne de direction (1) selon la revendication 1, **caractérisée en ce que** la roue menante (711) et la roue menée (701) sont réalisées sous forme de roues crantées et sont en relation active par l'intermédiaire d'un moyen de traction (700).
